# EUROPÄISCHE PATENTANMELDUNG

(11) **EP 4 501 606 A1**
(43) Veröffentlichungstag der Anmeldung: **05.02.2025**
(21) Anmeldenummer: 24191229.4
(22) Anmeldetag: 26.07.2024
(51) Int. Cl.: B29C 70/38, B29C 33/56

(54) **WERKZEUG, VORRICHTUNG UND VERFAHREN ZUM HERSTELLEN EINES LAMINIERTEN FASER-KUNSTSTOFF-VERBUND-BAUTEILS**

(30) Priorität: 29.07.2023 DE 102023120221
(71) Anmelder: Deutsches Zentrum für Luft- und Raumfahrt e.V., 53227 Bonn (DE)
(72) Erfinder: Samuel, Tröger, 70569 Stuttgart (DE); RAPP, Lukas, 70569 Stuttgart (DE); ATZLER, Fynn, 70569 Stuttgart (DE); HÜMBERT, Simon, 70569 Stuttgart (DE)
(74) Vertreter: Ege Lee & Roider Patentanwälte

(57) **Zusammenfassung**

Werkzeug (102) zum Herstellen eines laminierten Faser-Kunststoff-Verbund-Bauteils (104), das Werkzeug (102) aufweisend einen Formabschnitt (112) mit einer Formfläche (114), bei dem der Formabschnitt (112) einen ersten thermoplastischen Kunststoff mit einer ersten Schmelztemperatur aufweist und dazu ausgelegt und/oder angeordnet ist, vorimprägnierte Faserhalbzeuge zu formen und zu verbinden, wobei die Faserhalbzeuge einen zweiten thermoplastischen Kunststoff mit einer zweiten Schmelztemperatur als Matrixwerkstoff aufweisen und zwischen der ersten Schmelztemperatur und der zweiten Schmelztemperatur eine vorgegebene Mindestdifferenztemperatur besteht, Vorrichtung zum Herstellen eines laminierten Faser-Kunststoff-Verbund-Bauteils mit einem derartigen Werkzeug und einer Wärmequelle, wobei die Wärmequelle zum Erwärmen sowohl des Formabschnitts (112) als auch der Faserhalbzeuge ausgelegt und/oder angeordnet ist, und Verfahren zum Herstellen eines laminierten Faser-Kunststoff-Verbund-Bauteils (104), wobei zunächst wenigstens ein vorimprägniertes Faserhalbzeug auf eine Prozesstemperatur erwärmt, an der Formfläche (114) eines derartigen Werkzeugs (1 02) abgelegt und unter Druckbeaufschlagung konsolidiert wird, um eine erste Schicht des Faser-Kunststoff-Verbund-Bauteils (104) herzustellen.

## Beschreibung

Die Erfindung betrifft ein Werkzeug zum Herstellen eines Faser-Kunststoff-Verbund-Bauteils in einem Laminierverfahren, das Werkzeug aufweisend einen Formabschnitt mit einer Formfläche. Außerdem betrifft die Erfindung ein Verfahren zum Herstellen eines laminierten Faser-Kunststoff-Verbund-Bauteils.

Das Dokument US 2018/0229401 A1 betrifft ein präpariertes Formwerkzeug mit einer thermoplastischen Oberflächenschicht-Polymerbeschichtung auf der Formoberfläche des Formwerkzeugs oder ein präpariertes Prepreg mit einer thermoplastischen Oberflächenschicht-Polymerbeschichtung auf der Oberfläche des thermoplastischen faserverstärkten Prepregs, die das Auflegen der ersten Lage von thermoplastischen faserverstärkten Verbundstoff-Prepregs auf Formwerkzeuge für die Prepregbildung oder die In-situ-Bandplatzierung verbessern. Daraus resultieren thermoplastische faserverstärkte Verbundwerkstoffteile aus einem thermoplastischen faserverstärkten thermoplastischen Verbundwerkstoff, der strukturelle Verstärkungsfasern mit einem oder mehreren Hochleistungspolymeren aufweist, und eine thermoplastische Oberflächenschichtpolymerbeschichtung, die eine Polymermischung mit den Hochleistungspolymeren des thermoplastischen faserverstärkten Verbundwerkstoffs bildet.

Das Dokument US 2018/0229401 A1 betrifft Verfahren zum 3D-Drucken einer Werkzeugschale zur Verwendung bei der Herstellung von Paneelen für eine Transportstruktur, wie z. B. ein Automobil, ein Boot, ein Flugzeug oder ein anderes Fahrzeug oder eine andere mechanische Struktur. Ein 3D-Drucker kann verwendet werden, um eine Werkzeugschale herzustellen, die Invar und/oder ein anderes Material zur Verwendung beim Formen der Platten enthält. In einer 3D-gedruckten Werkzeugschale kann ein Kanal gebildet werden, der die Harzinfusion, die Vakuumerzeugung oder die Wärmeübertragung ermöglicht. Alternativ oder zusätzlich können ein oder mehrere hohle Abschnitte in der 3D-gedruckten Werkzeugschale gebildet werden, um das Gewicht der Schale zu reduzieren.

Das Dokument EP 2 944 454 A1 betrifft ein Werkzeug zum Auflegen von Verbundmaterial, um ein Werkstück mit einer Zielkontur zu bilden. Das Werkzeug umfasst eine Stützstruktur. Die Stützstruktur umfasst ein längliches Element mit einer Längsachse und Stützplatten, die mit dem länglichen Element verbunden sind und entlang der Längsachse voneinander beabstandet sind, wobei das längliche Element ein metallisches Material enthält, und eine nicht-metallische Stützstruktur, die mit den Stützplatten verbunden ist, wobei die nicht-metallische Stützstruktur eine Arbeitsfläche umfasst, die eine zur Zielkontur komplementäre Stützkontur enthält.

Aus dem Dokument DE 10 2018 119 751 A1 ist ein Verfahren bekannt zum Herstellen eines Hybrid-Bauteils, bei dem an einem Werkstückträger durch mindestens einen Tape-Leger über Tape-Legen eine Tape-Substrat-Lage hergestellt wird und anschließend auf der Tape-Substrat-Lage bei an dem Werkstückhalter angeordneter Tape-Substrat-Lage über mindestens einen 3D-Druckkopf eine Struktur durch additives Auftragen auf der Tape-Substrat-Lage hergestellt wird. Außerdem ist aus dem Dokument DE 10 2018 119 751 A1 eine Anlage bekannt zur Herstellung eines Hybrid-Bauteils, insbesondere zur Durchführung eines derartigen Verfahrens, umfassend mindestens einen Werkstückträger, mindestens einen Tape-Leger und mindestens einen 3D-Druckkopf, wobei der Werkstückträger ein Werkstückträger für Tape-Legen durch den mindestens einen Tape-Leger ist und für die Herstellung einer Struktur auf einer Tape-Lage ist.

Aus dem Dokument DE 10 2022 105 064 A1 ist ein Werkzeug bekannt zur Herstellung eines Faserverbundbauteils aus einem Faserverbundwerkstoff aufweisend ein Fasermaterial und ein Matrixmaterial, wobei das Fasermaterial in das Formwerkzeug zur Bildung einer Faserpreform eingebracht wird, das das Fasermaterial der Faserpreform einbettende Matrixmaterial in einem Temperprozess durch Temperierung ausgehärtet wird und das Formwerkzeug zumindest teilweise aus einem thermoplastischen Kunststoffmaterial besteht oder zumindest dessen formgebende Werkzeugoberfläche aus einem solchen thermoplastischen Kunststoffmaterial gebildet ist. Außerdem ist aus dem Dokument DE 10 2022 105 064 A1 ein Verfahren bekannt zur Herstellung eines Faserverbundbauteils aus einem Faserverbundwerkstoff aufweisend ein Fasermaterial und ein Matrixmaterial, wobei das Fasermaterial in ein bereitgestelltes Formwerkzeug zur Bildung einer Faserpreform eingebracht wird, das das Fasermaterial der Faserpreform einbettende Matrixmaterial in einem Temperprozess mit einer vorgegebenen maximalen Aushärtetemperatur durch Temperierung ausgehärtet wird und zumindest teilweise ein Formwerkzeug bereitgestellt wird, welches aus einem thermoplastischen Kunststoffmaterial besteht oder zumindest dessen formgebende Werkzeugoberfläche aus einem solchen thermoplastischen Kunststoffmaterial gebildet ist und dessen Schmelztemperatur oberhalb der vorgegebenen maximalen Aushärtetemperatur des Temperprozesses liegt.

Der Erfindung liegt die Aufgabe zugrunde, ein eingangs genanntes Werkzeug strukturell und/oder funktionell zu verbessern. Außerdem liegt der Erfindung die Aufgabe zugrunde, ein eingangs genanntes Verfahren zu verbessern.

Die Aufgabe wird gelöst mit einem Werkzeug mit den Merkmalen des Anspruchs 1. Außerdem wird die Aufgabe gelöst mit einer Vorrichtung mit den Merkmalen des Anspruchs 9. Außerdem wird die Aufgabe gelöst mit einem Verfahren mit den Merkmalen des Anspruchs 12. Vorteilhafte Ausführungen und/oder Weiterbildungen sind Gegenstand der Unteransprüche.

Das erfindungsgemäße Werkzeug ist zum Herstellen eines laminierten Faser-Kunststoff-Verbund-Bauteils ausgelegt. Das Werkzeug kann ein offenes Werkzeug sein. Das Werkzeug weist einen Formabschnitt auf. Der Formabschnitt weist einen ersten thermoplastischen Kunststoff mit einer ersten Schmelztemperatur auf. Der Formabschnitt kann aus einem ersten thermoplastischen Kunststoff mit einer ersten Schmelztemperatur hergestellt sein. Der Formabschnitt kann faserverstärkt sein. Der Formabschnitt kann Verstärkungsfasern aufweisen. Der erste thermoplastische Kunststoff kann als Matrixwerkstoff dienen. Der Matrixwerkstoff kann die Verstärkungsfasern umgeben. Die Verstärkungsfasern können durch adhäsive Wechselwirkungen an den Matrixwerkstoff gebunden sein. Als Verstärkungsfasern können beispielsweise Glasfasern, Basaltfasern, Kohlenstofffasern und/oder Aramidfasern verwendet werden.

Der Formabschnitt weist eine Formfläche auf. Die Formfläche kann offen und/oder frei zugänglich sein. Die Formfläche kann eine einem herzustellenden Faser-Kunststoff-Verbund-Bauteil entsprechende Form aufweisen. Die Formfläche kann räumlich und/oder reliefartig konturiert sein. Die Formfläche kann zumindest abschnittsweise einfach und/oder mehrfach gekrümmt sein. Die Formfläche kann eine vorgegebene Oberflächengüte und/oder Rauheit aufweisen. Beispielsweise kann die Formfläche einen Mittenrauwert 20µm<Rₐ<70µm aufweisen.

Der Formabschnitt und/oder die Formfläche können/kann dazu ausgelegt und/oder angeordnet sein, vorimprägnierte Faserhalbzeuge zu formen und zu verbinden, wobei die Faserhalbzeuge einen zweiten thermoplastischen Kunststoff mit einer zweiten Schmelztemperatur als Matrixwerkstoff aufweisen und der erste thermoplastische Kunststoff und der zweite thermoplastische Kunststoff inkompatibel sind. Der erste thermoplastische Kunststoff und der zweite thermoplastische Kunststoff können chemisch und/oder physikalisch inkompatibel sein. Eine Inkompatibiliät kann sich durch unterschiedliche Schmelztemperaturen des ersten thermoplastischen Kunststoffs und des zweiten thermoplastischen Kunststoffs ergeben.

Der Formabschnitt und/oder die Formfläche sind/ist dazu ausgelegt, vorimprägnierte Faserhalbzeuge zu formen und zu verbinden, wobei die Faserhalbzeuge einen zweiten thermoplastischen Kunststoff mit einer zweiten Schmelztemperatur als Matrixwerkstoff aufweisen und zwischen der ersten Schmelztemperatur und der zweiten Schmelztemperatur eine vorgegebene Mindestdifferenztemperatur besteht. Insofern kann der erste thermoplastische Kunststoff mit der ersten Schmelztemperatur ausgehend von dem zweiten thermoplastischen Kunststoff mit einer zweiten Schmelztemperatur ausgewählt sein. Die erste Schmelztemperatur kann niedriger als die zweite Schmelztemperatur sein. Die zweite Schmelztemperatur kann höher als die erste Schmelztemperatur sein.

Eine Kombination aus erstem thermoplastischem Kunststoff und zweitem thermoplastischem Kunststoff kann im Hinblick auf eine Einstellbarkeit einer temporären Anhaftung des Faser-Kunststoff-Verbund-Bauteils während seiner Herstellung ausgewählt sein. Die Mindestdifferenztemperatur kann im Hinblick auf eine Einstellbarkeit einer temporären Anhaftung des Faser-Kunststoff-Verbund-Bauteils während seiner Herstellung ausgewählt sein. Als "temporäre Anhaftung" wird vorliegend insbesondere eine Anhaftung des Faser-Kunststoff-Verbund-Bauteils während seiner Herstellung verstanden.

Der Formabschnitt und/oder die Formfläche können/kann dazu ausgelegt und/oder angeordnet sein, die Faserhalbzeuge in einem automatisierten Verfahren zu formen und zu verbinden. Als automatisiertes Verfahren wird vorliegend insbesondere ein Verfahren verstanden, das unter Verwendung geeigneter Systeme prozessüberwacht, gesteuert und/oder geregelt ausgeführt wird.

Die vorgegebene Mindestdifferenztemperatur kann 70°C, insbesondere 80°C, insbesondere 90°C, insbesondere 100°C, insbesondere 110°C, betragen.

Der Formabschnitt kann als ersten thermoplastischen Kunststoff einen technischen Thermoplast, insbesondere Polyamid (PA), insbesondere Polyamid 6 (PA6), oder Polyoxymethylen (POM), insbesondere kohlenstofffasergefülltes Polyoxymethylen (CF-POM), aufweisen. Der Formabschnitt kann dazu ausgelegt sein, vorimprägnierte Faserhalbzeuge zu formen und zu verbinden, wobei die Faserhalbzeuge als zweiten thermoplastischen Kunststoff einen Hochleistungsthermoplast, insbesondere Polyetherketon (PEK), insbesondere Polyaryletherketon (PAEK), insbesondere niedrigschmelzendes Polyaryletherketon (LM-PAEK), aufweisen können.

Der Formabschnitt kann als ersten thermoplastischen Kunststoff einen Hochleistungsthermoplast, insbesondere Polyetherketon (PEK), insbesondere Polyaryletherketon (PAEK), insbesondere niedrigschmelzendes Polyaryletherketon (LM-PAEK), aufweisen. Der Formabschnitt kann dazu ausgelegt sein, vorimprägnierte Faserhalbzeuge zu formen und zu verbinden, wobei die Faserhalbzeuge als zweiten thermoplastischen Kunststoff einen technischen Thermoplast, insbesondere Polyamid (PA), insbesondere Polyamid 6 (PA6), oder Polyoxymethylen (POM), insbesondere kohlenstofffasergefülltes Polyoxymethylen (CF-POM), aufweisen können.

Die Formfläche kann eine Vorderseite des Formabschnitts bilden. Der Formabschnitt kann eine Rückseite aufweisen. Der Formabschnitt kann eine vorgegebene Dicke aufweisen. "Dicke" bezeichnet in diesem Zusammenhang insbesondere einen Abstand zwischen der Vorderseite und der Rückseite. Der Formabschnitt kann eine zumindest annähernd konstante Dicke aufweisen. Der Formabschnitt kann eine einer räumlichen und/oder reliefartigen Konturierung der Formfläche entsprechend variierende Dicke aufweisen. Der Formabschnitt kann selbsttragend sein. Der Formabschnitt kann zur Anordnung an einem Tragabschnitt ausgelegt sein.

Das Werkzeug kann einen Tragabschnitt aufweisen. Der Tragabschnitt kann eine Verbindungsfläche für den Formabschnitt aufweisen. Die Verbindungsfläche kann zur kraft-, form- und/oder stoffschlüssigen Anbindung des Formabschnitts ausgelegt /oder angeordnet sein. Die Verbindungsfläche kann konturiert sein. Die Verbindungsfläche kann formabschnittnah konturiert sein. Die Verbindungsfläche kann einer räumlichen und/oder reliefartigen Konturierung der Formfläche entsprechend konturiert sein. Der Tragabschnitt kann wenigstens eine Verbindungskontur aufweisen. Die wenigstens eine Verbindungskontur kann hinterschnitten sein. Die Verbindungsfläche kann eine vorgegebene Mindestrauheit aufweisen.

Der Formabschnitt kann an dem Tragabschnitt angeordnet sein. Der Formabschnitt kann mit dem Tragabschnitt fest verbunden sein. Der Formabschnitt kann mit seiner Rückseite an dem Tragabschnitt angeordnet und/oder mit dem Tragabschnitt fest verbunden sein. Der Formabschnitt kann an dem Tragabschnitt hergestellt und/oder auf den Tragabschnitt aufgebracht sein. Der Formabschnitt kann in einem Schmelzverfahren hergestellt und/oder aufgebracht sein. Der Formabschnitt kann in einem extrusionsbasierten Verfahren hergestellt und/oder aufgebracht sein. Der Formabschnitt kann in einem additiven Verfahren hergestellt und/oder aufgebracht sein. Das additive Verfahren kann auch als generatives Verfahren, 3D-Druck-Verfahren oder Rapid Tooling Verfahren bezeichnet werden. Insbesondere kann der Formabschnitt in einem Fused-Granular-Fabrication-Verfahren (FGF-Verfahren) hergestellt und/oder aufgebracht sein. Bei dem FGF-Verfahren wird geschmolzenes Kunststoffgranulat Schicht für Schicht auf ein Druckbett oder den Tragabschnitt extrudiert, um nach und nach den Formabschnitt zu erzeugen. Dazu wird das Kunststoffgranulat einem Extrusionskopf zugeführt, der es erhitzt und zu einer homogenen, geschmolzenen Kunststoffmasse presst.

Die erfindungsgemäße Vorrichtung ist zum Herstellen eines laminierten Faser-Kunststoff-Verbund-Bauteils ausgelegt und/oder angeordnet. Die Vorrichtung weist ein derartiges Werkzeug und eine Wärmequelle auf. Die Wärmequelle kann zur Wärmeübertragung zum Erwärmen durch Wärmeleitung, Konvektion und/oder Wärmestrahlung ausgelegt und/oder angeordnet sein. Die Wärmequelle kann als Infrarotstrahler, insbesondere als Infrarotlaser, ausgeführt sein. Die Wärmequelle ist zum Erwärmen sowohl des Formabschnitts als auch der Faserhalbzeuge ausgelegt und/oder angeordnet. Die Wärmequelle kann dazu ausgelegt und/oder angeordnet sein, den Formabschnitt und die Faserhalbzeuge gleichzeitig und/oder in einem Arbeitsgang zu erwärmen. Die Vorrichtung kann dazu ausgelegt und/oder angeordnet sein, das Faser-Kunststoff-Verbund-Bauteil automatisiert herzustellen.

Die Wärmequelle kann dazu ausgelegt und/oder angeordnet sein, den Formabschnitt auf eine erste vorbestimmte Prozesstemperatur und die Faserhalbzeuge auf eine zweite vorbestimmte Prozesstemperatur zu erwärmen. Die erste vorbestimmte Prozesstemperatur und die zweite vorbestimmte Prozesstemperatur können gleich oder unterschiedlich sein. Die erste vorbestimmte Prozesstemperatur und die zweite vorbestimmte Prozesstemperatur können einen vorbestimmten Unterschied aufweisen. Eine Abgabeleistung der Wärmequelle kann kontrollierbar sein. Soweit nicht anders angegeben oder es sich aus dem Zusammenhang nicht anders ergibt, ist "Kontrollieren" vorliegend insbesondere als regelungstechnisches und/oder steuerungstechnisches Kontrollieren zu verstehen. Eine Abgabeleistung der Wärmequelle kann automatisiert kontrollierbar sein.

Die Wärmequelle kann verlagerbar angeordnet sein. Die Wärmequelle kann verlagerbar angeordnet sein, um eine Wärmeübertragung auf den Formabschnitt und/oder die Faserhalbzeuge einzustellen. Die Wärmequelle kann rotatorisch und/oder translatorisch verlagerbar angeordnet sein. Die Wärmequelle kann zu dem Formabschnitt hin und/oder von dem Formabschnitt weg verlagerbar sein. Die Wärmequelle kann zu den Faserhalbzeugen hin und/oder von den Faserhalbzeugen weg verlagerbar sein. Die Wärmequelle kann automatisiert verlagerbar sein.

Die Wärmequelle kann eine Optik aufweisen. Die Optik kann dazu ausgelegt und/oder angeordnet sein, eine Wärmestrahlung zu fokussieren. Die Optik und/oder eine Fokus können/kann einstellbar sein. Die Optik und/oder eine Fokus können/kann automatisiert einstellbar sein.

Das erfindungsgemäße Verfahren ist zum Herstellen eines laminierten Faser-Kunststoff-Verbund-Bauteils ausgelegt. Zunächst wird wenigstens ein vorimprägniertes Faserhalbzeug auf eine Prozesstemperatur erwärmt, an der Formfläche eines derartigen Werkzeugs abgelegt und unter Druckbeaufschlagung konsolidiert, um eine erste Schicht des Faser-Kunststoff-Verbund-Bauteils herzustellen, wobei das wenigstens eine Faserhalbzeug einen zweiten thermoplastischen Kunststoff mit einer zweiten Schmelztemperatur als Matrixwerkstoff aufweisen und zwischen der ersten Schmelztemperatur und der zweiten Schmelztemperatur eine vorgegebene Mindestdifferenztemperatur besteht. Das Verfahren kann automatisiert ausgeführt werden. Das Erwärmen, Ablegen und/oder Konsolidieren können/kann automatisiert erfolgen. Die vorgegebene Mindestdifferenztemperatur kann 70°C, insbesondere 80°C, insbesondere 90°C, insbesondere 100°C, insbesondere 110°C betragen.

Die Formfläche kann erwärmt werden, um eine erste Schicht des Faser-Kunststoff-Verbund-Bauteils herzustellen. Die Formfläche kann vor dem Ablegen des wenigstens ein Faserhalbzeugs erwärmt werden. Die Formfläche kann gemeinsam mit dem wenigstens ein Faserhalbzeug erwärmt werden. Die Formfläche kann bis unterhalb der ersten Schmelztemperatur erwärmt werden. Die Formfläche kann bis zur ersten Schmelztemperatur erwärmt werden. Die Formfläche kann über die erste Schmelztemperatur erwärmt werden. Das wenigstens eine Faserhalbzeug kann auf eine höhere Temperatur als die Formfläche erwärmt werden. Die Formfläche kann vor einem Aufbringen des wenigstens einen Faserhalbzeugs mithilfe einer Wärmequelle der Vorrichtung und/oder nach Aufbringen des wenigstens einen Faserhalbzeugs mithilfe des wenigstens einen Faserhalbzeugs erwärmt werden.

Das wenigstens eine Faserhalbzeug kann mit einer reduzierten Kraft abgelegt werden. Die Ablegekraft kann in Bezug auf eine nach dem Stand der Technik übliche Ablegekraft reduziert sein. Das wenigstens eine Faserhalbzeug kann unter erhöhtem Druck konsolidiert werden. Der Konsolidierungsdruck kann in Bezug auf einen nach dem Stand der Technik üblichen Konsolidierungsdruck erhöht sein.

Die Faserhalbzeuge weisen Verstärkungsfasern und einen Matrixwerkstoff aufweisen. Der zweite thermoplastische Kunststoff dient als Matrixwerkstoff. Der Matrixwerkstoff kann die Verstärkungsfasern umgeben. Die Verstärkungsfasern können durch adhäsive Wechselwirkungen an den Matrixwerkstoff gebunden sein. Als Verstärkungsfasern können beispielsweise Glasfasern, Basaltfasern, Kohlenstofffasern und/oder Aramidfasern verwendet werden. Die Verstärkungsfasern können Endlosfasern sein. Die Verstärkungsfasern können unidirektional angeordnet sein. Die Faserhalbzeuge können als zweiten thermoplastischen Kunststoff einen Hochleistungsthermoplast, insbesondere Polyetherketon (PEK), insbesondere Polyaryletherketon (PAEK), insbesondere niedrigschmelzendes Polyaryletherketon (LM-PAEK) oder Polyetheretherketon (PEEK), aufweisen. Die Faserhalbzeuge können bandförmig vorliegen. Die Faserhalbzeuge können auch als Tapes bezeichnet werden.

Zum Erwärmen, Ablegen und/oder Konsolidieren der Faserhalbzeuge kann ein Roboter mit einem geeigneten Endeffektor verwendet werden. Der Endeffektor kann eine Erwärmungseinrichtung, eine Abrolleinrichtung und/oder einen Anpressabschnitt aufweisen. Die Erwärmungseinrichtung kann eine Wärmequelle, beispielsweise einen Laser, aufweisen. Die Wärmequelle kann in Bezug auf eine Stelle, an der ein einlaufendes Faserhalbzeuge mit der Formfläche oder einer vorhergehenden Schicht in Berührung kommt, und/oder in Bezug auf einen Abstand zu einem zu erwärmenden Faserhalbzeuge verlagerbar sein. Die Wärmequelle kann kontrolliert verlagerbar sein. Die Wärmequelle kann in Bezug auf eine Wärmeabgabe kontrollierbar sein.

Die Faserhalbzeuge können in einem Automated-Fibre-Placement-Verfahren (AFP-Verfahren) geformt und verbunden werden. Das AFP-Verfahren ist ein automatisierter Herstellungsprozess für Verbundwerkstoffe, bei dem mit einem Matrixwerkstoff vorimprägnierte Verstärkungsfasern erhitzt und verdichtet werden. Die Faserhalbzeuge können in Form von "Tows" oder "Tapes" vorliegen. Die Faserhalbzeuge können an der Formfläche abgelegt und konsolidiert werden, um eine mit der Formfläche temporär verbundene erste Schicht herzustellen.

Eine Prozesstemperatur, ein Prozesstemperaturverlauf, ein Konsolidierungsdruck und/oder ein Konsolidierungsdruckverlauf können/kann im Hinblick auf eine temporäre Verbindung zwischen der Formfläche und der ersten Schicht kontrolliert werden. Der Prozesstemperaturverlauf kann zeitlich und/oder örtlich kontrolliert werden. Die Prozesstemperatur, der Prozesstemperaturverlauf, der Konsolidierungsdruck und der Konsolidierungsdruckverlauf können Prozessparameter des Verfahrens sein. Die Prozesstemperatur kann in einem Erweichungsbereich und/oder Fließbereich des ersten thermoplastischen Kunststoffs und/oder des zweiten thermoplastischen Kunststoffs liegen. Das Verfahren kann weitere Prozessparameter aufweisen und/oder von weiteren Prozessparametern beeinflusst sein.

"Im Hinblick auf eine temporäre Verbindung" bedeutet insbesondere, dass die Prozesstemperatur, der Prozesstemperaturverlauf, der Konsolidierungsdruck und/oder der Konsolidierungsdruckverlauf kontrolliert werden, um die Verbindung im Hinblick auf Eigenschaften einzustellen, die für eine temporäre Verbindung zwischen der Formfläche und der ersten Schicht relevant sind. Insbesondere soll einerseits die erste Schicht kräftemäßig und/oder zeitlich hinreichende mit der Formfläche verbunden und andererseits ein Entformen des laminierten Faser-Kunststoff-Verbund-Bauteils ermöglicht sein. Außerdem soll die erste Schicht beim Entformen des laminierten Faser-Kunststoff-Verbund-Bauteils möglichst rückstandsfrei von der Formfläche lösbar sein. Außerdem soll eine Oberflächenstruktur, insbesondere eine Rauheit, der Formfläche möglichst erhalten bleiben.

Eine einzustellende Eigenschaft der Verbindung zwischen der Formfläche und der ersten Schicht kann eine Festigkeit der Verbindung sein. Zum Beurteilen und/oder Einstellen der Festigkeit können/kann eine Schälkraft oder Schälhaftung herangezogen werden. Die Schälhaftung oder Schälkraft ist definiert als die Kraft, die benötigt wird, um die erste Schicht und/oder das Faser-Kunststoff-Verbund-Bauteil von der Formfläche abzuziehen. Zum Beurteilen und/oder Einstellen der Festigkeit können/kann außerdem Tack, Kohäsion und/oder Adhäsion des ersten thermoplastischen Kunststoffs und/oder des zweiten thermoplastischen Kunststoffs herangezogen werden.

Nachfolgend kann wenigstens ein weiteres vorimprägniertes Faserhalbzeug auf eine Prozesstemperatur erwärmt, an einer vorhergehenden Schicht abgelegt und unter Druckbeaufschlagung konsolidiert werden, um wenigstens eine weitere Schicht herzustellen. Dabei können/kann eine Prozesstemperatur, ein Prozesstemperaturverlauf, ein Konsolidierungsdruck und/oder ein Konsolidierungsdruckverlauf im Hinblick auf eine permanente Verbindung zwischen den Schichten kontrolliert werden. Das wenigstens eine weitere Faserhalbzeug kann auf eine höhere Temperatur als die vorhergehende Schicht erwärmt werden.

"Im Hinblick auf eine permanente Verbindung" bedeutet insbesondere, dass die Prozesstemperatur, der Prozesstemperaturverlauf, der Konsolidierungsdruck und/oder der Konsolidierungsdruckverlauf kontrolliert werden, um die Verbindung im Hinblick auf Eigenschaften einzustellen, die für eine permanente Verbindung zwischen der der ersten Schicht und der wenigstens einen weiteren Schicht relevant sind. Insbesondere sollen die erste Schicht und die wenigstens eine weitere Schicht dauerhaft fest miteinander verbunden sein entsprechend den Anforderungen an das herzustellende oder hergestellt Faser-Kunststoff-Verbund-Bauteil.

Beim Herstellen der ersten Schicht einerseits und beim Herstellen der wenigstens einen weiteren Schicht andererseits können die Prozesstemperaturen, die Prozesstemperaturverläufe, die Konsolidierungsdrücke und/oder die Konsolidierungsdruckverläufe unterschiedlich kontrolliert werden, insbesondere jeweils angepasst an ein Herstellen einer temporären Verbindung oder das Herstellen einer permanenten Verbindung.

Die erste Schicht kann bei einer geringeren Prozesstemperatur, einem geringeren Prozesstemperaturverlauf, einem geringeren Konsolidierungsdruck und/oder einem geringeren Konsolidierungsdruckverlauf als die wenigstens eine weitere Schicht hergestellt werden. Die wenigstens eine weitere Schicht kann bei einer höheren Prozesstemperatur, einem höheren Prozesstemperaturverlauf, einem höheren Konsolidierungsdruck und/oder einem höheren Konsolidierungsdruckverlauf als die erste Schicht hergestellt werden.

Die erste Schicht und die wenigstens eine weitere Schicht können ein volllaminiertes Faser-Kunststoff-Verbund-Bauteil bilden. Die erste Schicht und die wenigstens eine weitere Schicht können eine erste Deckschicht eines Sandwich-Faser-Kunststoff-Verbund-Bauteils bilden. Das Verfahren kann weitere Schritte aufweisen. Das Faser-Kunststoff-Verbund-Bauteil kann in Sandwichbauweise hergestellt werden. Das Verfahren kann Schritte zum Herstellen eines Bauteilkerns aufweisen. Das Verfahren kann Schritte zum Herstellen einer zweiten Deckschicht aufweisen.

Zusammenfassend und mit anderen Worten dargestellt ergibt sich somit durch die Erfindung unter anderem eine Nutzung einer thermoplastischen Formwerkzeugoberfläche in Kombination mit einem Automated-Fibre-Placement-Werkstoff (AFP-Werkstoff) stark unterschiedlicher Schmelztemperaturen zur Erzeugung einer Erstlagen-Haftung beim Automated Fibre Placement.

Beispielsweise kann ein Werkzeug mit einer Formfläche aus Polyamid 6 für das Auflegen von endlosfaserverstärkten LM-PAEK-Tapes als vorimprägnierte Halbzeuge in einem in-situ AFP-Prozess zur Bildung eines Bauteils verwendet werden. Das Werkzeugmaterial PA6 ermöglicht eine gute Haftung des Bauteils in der Form während der Fertigung sowie eine gute Entformbarkeit des Bauteils nach der Fertigung aufgrund der Inkompatibilität der Kunststoffe. PA6 kann als thermoplastischer Werkstoff mittels Extrusion-basierten Fertigungsmethoden, wie 3D-Druck, zu Formen verarbeitet werden. So lassen sich komplexe Formen in kurzer Zeit mit geringen Materialkosten herstellen. Eine Stärke der Verbindung zwischen Tapes und Form kann durch Anpassung der Prozessparameter des AFP-Prozesses eingestellt werden.

Ein Werkzeug kann zumindest an seiner Oberfläche ein Thermoplast, auch mit Faserverstärkung, aufweisen, der mittels eines technischen Schmelzverfahrens aufgebracht wird, dessen Schmelztemperatur sich von derjenigen eines AFPapplizierten Werkstoffs signifikant unterscheidet.

Das beschriebene Erstlagen-Konzept kann auch angewendet werden, indem ein vorbereiteter form- bzw. bauteilnaher Kern aus einem geeigneten Material, beispielsweise Grundplatte/formkonturnahe Blöcke, um eine Formendkontur-Schicht automatisiert aufgetragen wird, sofern der Kern mit entsprechenden Verbindungsmöglichkeiten für die Kunststoffbeschichtung präpariert ist.

Anwendbar sind/ist das Werkzeug und/oder das Verfahren insbesondere als Rapid Tooling Technologie für AFP-Prozesse, im Werkzeugbau für AFP-Prozesse, im Prototypenbau von faserverstärkten Kunststoffbauteilen (FVK-Bauteilen) im AFP-Prozess oder in der Kleinserienproduktion von FVK-Bauteilen. Die Erstlagen-Technologie kann in der Preforming Herstellung als Preforming-Tooling zum Aufbau von Faser- und Zuschnitt-Stapeln von faserverstärkten Tapes in 2D- und 3D-Stapeln als bspw. Vorstufe von Composite-Bauteilen genutzt werden. Das Verfahrenskonzept als technisches Bauteil oder Form konvergiert kann z.B. ein thermoplastisches, wiederverwendbares "Druckbett" oder "Substrat" für AFP und Organoblech-Stapel-Maschinen darstellen aus niedrig/hochschmelzendem Kunststoff, z.B. PA6-Platte in Kombination mit PAEK-Tapes.

Mit der Erfindung wird ein Aufwand, wie Zeit- und/oder Kostenaufwand, reduziert. Ein Materialbedarf wird reduziert. Eine Bauteilqualität wird verbessert. Eine Flexibilität wird erhöht. Eine Prozesssicherheit wird erhöht. Ein Einstellen einer Verbindung im Hinblick auf Eigenschaften, die für eine temporäre Verbindung zwischen einer Formfläche und einer ersten Schicht relevant sind, wird ermöglicht. Einerseits wird die erste Schicht kräftemäßig und/oder zeitlich hinreichende mit der Formfläche verbunden und andererseits wird ein Entformen des laminierten Faser-Kunststoff-Verbund-Bauteils ermöglicht. Die erste Schicht ist beim Entformen des laminierten Faser-Kunststoff-Verbund-Bauteils zumindest annähernd rückstandsfrei von der Formfläche lösbar. Ein Verschleiß einer Oberflächenstruktur, insbesondere einer Rauheit, wird reduziert oder vermieden. Faser-Kunststoff-Verbund-Bauteile mit komplex gekrümmten Oberflächen können effizient hergestellt werden.

Nachfolgend werden Ausführungsbeispiele der Erfindung unter Bezugnahme auf Figuren näher beschrieben, dabei zeigen schematisch und beispielhaft:
- Fig. 1: eine Prozesskette, die das Herstellen eines Werkzeugs in einem FGF-Verfahren und ein Herstellen eines laminierten Faser-Kunststoff-Verbund-Bauteils in einem AFP-Verfahren kombiniert und
- Fig 2: für ein AFP-Verfahren eingestellte Prozessparameter.

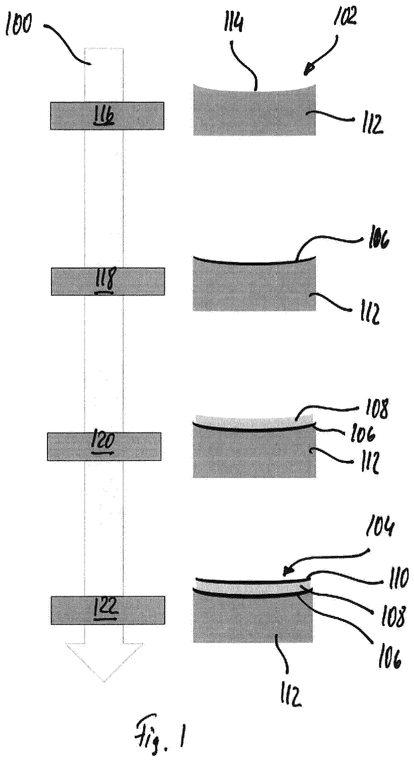

Fig. 1 zeigt eine Prozesskette 100, die das Herstellen eines Werkzeugs 102 und ein Herstellen eines laminierten Faser-Kunststoff-Verbund-Bauteils 104 kombiniert. Das Faser-Kunststoff-Verbund-Bauteil 104 wird in Sandwichbauweise hergestellt und weist eine erste Deckschicht 106, einen Bauteilkern 108 und eine zweite Deckschicht 110 auf.

Das Werkzeug 102 weist einen Formabschnitt 112 auf. Der Formabschnitt 112 ist in einem FGF-Verfahren aus einem ersten thermoplastischen Kunststoff hergestellt und weist eine Formfläche 114 auf. Das Herstellen des Werkzeugs 102 ist in Fig. 1 mit 116 bezeichnet.

Die erste Deckschicht 106 wird als Laminat mit einer ersten Schicht und weiteren Schichten aus bandförmigen vorimprägnierten Faserhalbzeugen, die als Tape bezeichnet werden, hergestellt. Vorliegend werden Bänder mit einer Breite von 12,7 mm bzw. 6,4 mm verwendet. Die für die erste Deckschicht 106 verwendeten Faserhalbzeuge weisen Kohlenstofffasern als Verstärkungsfasern und niedrigschmelzendes Polyaryletherketon (LM-PAEK) mit einem Schmelzpunkt von 305°C als Matrixwerkstoff bzw. zweiten thermoplastischen Kunststoff auf. Vorliegend werden Faserhalbzeuge mit einem Faser-Volumen-Anteil von 60% verwendet. Davon ausgehend ist als erster thermoplastischer Kunststoff für den Formabschnitt 112 Polyamid 6 (PA6) ausgewählt. Vorliegend wird als Substrat gegossenes PA6 mit einer Schmelztemperatur von 216°C verwendet, das schwarz eingefärbt wurde, um Reflexion einer Wärmequelle, wie Laser, während des AFP-Prozesses zu verringern. Vorliegend wird auch aus einem kohlenstofffaserverstärkten PA6-Granulat mit einer Schmelztemperatur von 220°C 3D-gedrucktes Substrat verwendet.

Zum Herstellen des Faser-Kunststoff-Verbund-Bauteils 104 wird zunächst die erste Deckschicht 106 in einem AFP-Verfahren hergestellt. Dazu werden Faserhalbzeuge auf eine Prozesstemperatur erwärmt, an der Formfläche 114 abgelegt und unter Druckbeaufschlagung konsolidiert, um die erste Schicht der ersten Deckschicht 106 herzustellen. Dabei werden eine Prozesstemperatur, ein Prozesstemperaturverlauf, ein Konsolidierungsdruck und/oder ein Konsolidierungsdruckverlauf im Hinblick auf eine temporäre Verbindung zwischen der Formfläche 114 und der ersten Schicht derart kontrolliert, dass die erste Schicht kräftemäßig und/oder zeitlich hinreichende mit der Formfläche 114 verbunden ist, ein Entformen des laminierten Faser-Kunststoff-Verbund-Bauteils 104 ermöglicht ist, die erste Schicht beim Entformen des laminierten Faser-Kunststoff-Verbund-Bauteils 104 rückstandsfrei von der Formfläche 114 lösbar ist und eine Rauheit der Formfläche 114 erhalten bleibt.

Nach Herstellung der ersten Schicht wird eine weitere Schicht der ersten Deckschicht 106 hergestellt, indem Faserhalbzeuge auf eine Prozesstemperatur erwärmt, an der ersten Schicht abgelegt und unter Druckbeaufschlagung konsolidiert werden. Dabei werden eine Prozesstemperatur, ein Prozesstemperaturverlauf, ein Konsolidierungsdruck und/oder ein Konsolidierungsdruckverlauf im Hinblick auf eine permanente Verbindung zwischen der ersten Schicht und der weiteren Schichten derart kontrolliert, dass eine dauerhaft feste entsprechend den Anforderungen an das herzustellende oder hergestellt Faser-Kunststoff-Verbund-Bauteil gewährleistet ist. Entsprechend werden weitere Schichten hergestellt, bis die laminierte erste Deckschicht 106 fertig gestellt ist. Das Herstellen der ersten Deckschicht 106 ist in Fig. 1 mit 118 bezeichnet.

Nachfolgend wird an der ersten Deckschicht 106 der Bauteilkern 108 in einem FGF-Verfahren als Wabenstruktur hergestellt. Das Herstellen des Bauteilkerns 108 ist in Fig. 1 mit 120 bezeichnet. Nachfolgend wird an dem Bauteilkern 108 die zweite Deckschicht 110 in einem AFP-Verfahren hergestellt. Das Herstellen der zweiten Deckschicht 110 ist in Fig. 1 mit 122 bezeichnet.

Abschließend wird das Faser-Kunststoff-Verbund-Bauteil 104 aus dem Werkzeug 102 entnommen, wobei sich die erste Deckschicht 106 einwandfrei von der Formfläche 114 löst. Das Faser-Kunststoff-Verbund-Bauteil 104 weist an seiner Deckschicht 104 die gewünschte Oberflächenstruktur auf und die Formfläche 114 steht zur Herstellung weiterer Faser-Kunststoff-Verbund-Bauteile zur Verfügung.

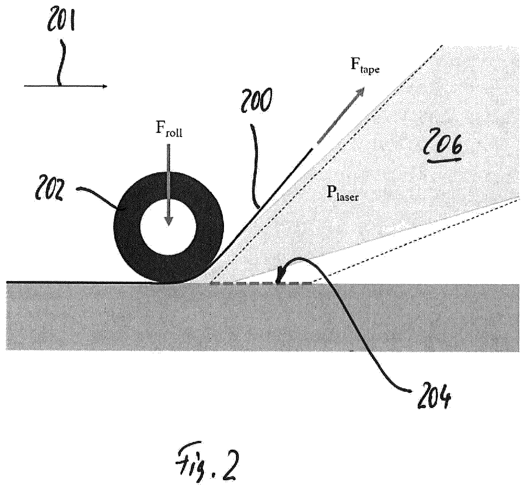

Fig. 2 zeigt für das mit Bezug auf Fig. 1 beschriebene AFP-Verfahren eingestellten Prozessparameter. Das bandförmige Faserhalbzeug 200 liegt zunächst aufgerollt vor und wird bei einer reduzierten Prozesstemperatur von 420°C in einer Legerichtung 201 abgelegt. Die Faserhalbzeug-Rolle 202 wird mit einer Konsolidierungskraft F_{Roll} von 500N angepresst. Das bandförmige Faserhalbzeug 200 wird mit einer reduzierten Bandkraft Fₜₐₚₑ von 5N abgelegt. Zum Erwärmen des Faserhalbzeugs 200 und der Formfläche 204 wird ein Laser als Wärmequelle verwendet. Eine Laserposition 206 ist einstellbar und wird derart gewählt, dass sich ein Heizbereich an der Formfläche 204 und an dem Faserhalbzeugs 200 ergibt. Das Faserhalbzeug 200 wird stärker erwärmt als die Formfläche 204. Die Formfläche 204 wird vor Aufbringen des Faserhalbzeugs 200 zunächst mithilfe des Lasers als Wärmequelle erwärmt. Nach dem Aufbringen des Faserhalbzeugs 200 erfolgt eine weitere Wärmeübertragung von dem Faserhalbzeug 200 auf die Formfläche 204. Ein Überschreiten der ersten Schmelztemperatur wird vorliegend erst durch die weitere Wärmeübertragung erreicht.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den mit der Beschreibung offenbarten Merkmalskombinationen können bedarfsweise auch Merkmale herausgegriffen und unter Auflösung eines zwischen den Merkmalen gegebenenfalls bestehenden strukturellen und/oder funktionellen Zusammenhangs alleine oder in Kombination mit anderen Merkmalen zur Abgrenzung des Anspruchsgegenstands verwendet werden.

### Bezugszeichen

- 100: Prozesskette
- 102: Werkzeug
- 104: Faser-Kunststoff-Verbund-Bauteil
- 106: erste Deckschicht
- 108: Bauteilkern
- 110: zweite Deckschicht
- 112: Formabschnitt
- 114: Formfläche
- 116: Herstellen des Werkzeugs
- 118: Herstellen der ersten Deckschicht
- 120: Herstellen des Bauteilkerns
- 122: Herstellen der zweiten Deckschicht

- 200: Faserhalbzeug
- 201: Legerichtung
- 202: Faserhalbzeug-Rolle
- 204: Formfläche
- 206: Laserposition
- 208: Heizbereich

## Patentansprüche

1. Werkzeug (102) zum Herstellen eines laminierten Faser-Kunststoff-Verbund-Bauteils (104), das Werkzeug (102) aufweisend einen Formabschnitt (112) mit einer Formfläche (114, 204), **dadurch gekennzeichnet, dass** der Formabschnitt (112) einen ersten thermoplastischen Kunststoff mit einer ersten Schmelztemperatur aufweist und dazu ausgelegt und/oder angeordnet ist, vorimprägnierte Faserhalbzeuge (200) zu formen und zu verbinden, wobei die Faserhalbzeuge (200) einen zweiten thermoplastischen Kunststoff mit einer zweiten Schmelztemperatur als Matrixwerkstoff aufweisen und zwischen der ersten Schmelztemperatur und der zweiten Schmelztemperatur eine vorgegebene Mindestdifferenztemperatur besteht.

2. Werkzeug (102) nach Anspruch 1, **dadurch gekennzeichnet, dass** die erste Schmelztemperatur niedriger als die zweite Schmelztemperatur ist und/oder die vorgegebene Mindestdifferenztemperatur 70°C, insbesondere 80°C, insbesondere 90°C, insbesondere 100°C, insbesondere 110°C, beträgt.

3. Werkzeug (102) nach wenigstens einem der Ansprüche 1 bis 2, **dadurch gekennzeichnet, dass** der Formabschnitt (112) in einem Schmelzverfahren hergestellt ist.

4. Werkzeug (102) nach wenigstens einem der Ansprüche 1 bis 3, **dadurch gekennzeichnet, dass** das Werkzeug (102) einen Tragabschnitt aufweist und der Formabschnitt (112) mit dem Tragabschnitt fest verbunden ist.

5. Werkzeug (102) nach Anspruch 4, **dadurch gekennzeichnet, dass** der Tragabschnitt eine Verbindungsfläche für den Formabschnitt (112) aufweist und die Verbindungsfläche formabschnittnah konturiert und/oder zur kraft-, form- und/oder stoffschlüssigen Anbindung des Formabschnitts (112) ausgelegt und/oder angeordnet ist.

6. Werkzeug (102) nach wenigstens einem der Ansprüche 1 bis 5, **dadurch gekennzeichnet, dass** der Formabschnitt (112) als ersten thermoplastischen Kunststoff einen technischen Thermoplast, insbesondere Polyamid (PA) oder Polyoxymethylen (POM), aufweist und dazu ausgelegt und/oder angeordnet ist, vorimprägnierte Faserhalbzeuge (200) zu formen und zu verbinden, wobei die Faserhalbzeuge (200) als zweiten thermoplastischen Kunststoff einen Hochleistungsthermoplast, insbesondere Polyetherketon (PEK), insbesondere Polyaryletherketon (PAEK), insbesondere niedrigschmelzendes Polyaryletherketon (LM-PAEK), aufweisen.

7. Werkzeug (102) nach wenigstens einem der Ansprüche 1 bis 6, **dadurch gekennzeichnet, dass** der Formabschnitt (112) in einem extrusionsbasierten additiven Verfahren hergestellt und/oder aufgebracht ist.

8. Werkzeug (102) nach wenigstens einem der Ansprüche 1 bis 7, **dadurch gekennzeichnet, dass** der Formabschnitt (112) faserverstärkt ist.

9. Vorrichtung zum Herstellen eines laminierten Faser-Kunststoff-Verbund-Bauteils (104), **dadurch gekennzeichnet, dass** die Vorrichtung ein Werkzeug (102) nach wenigstens einem der Ansprüche 1 bis 8 und eine Wärmequelle aufweist, wobei die Wärmequelle zum Erwärmen sowohl des Formabschnitts (112) als auch der Faserhalbzeuge (200) ausgelegt und/oder angeordnet ist.

10. Vorrichtung nach Anspruch 9, **dadurch gekennzeichnet, dass** die Wärmequelle dazu ausgelegt und/oder angeordnet ist, den Formabschnitt (112) auf eine erste vorbestimmte Prozesstemperatur und die Faserhalbzeuge (200) auf eine zweite vorbestimmte Prozesstemperatur zu erwärmen.

11. Vorrichtung nach wenigstens einem der Ansprüche 9 bis 10, **dadurch gekennzeichnet, dass** die Wärmequelle verlagerbar angeordnet ist, um eine Wärmeübertragung auf den Formabschnitt (112) und/oder die Faserhalbzeuge (200) einzustellen.

12. Verfahren zum Herstellen eines laminierten Faser-Kunststoff-Verbund-Bauteils (104), **dadurch gekennzeichnet, dass** zunächst wenigstens ein vorimprägniertes Faserhalbzeug (200) auf eine Prozesstemperatur erwärmt, an der Formfläche (114, 204) eines Werkzeugs (102) nach wenigstens einem der Ansprüche 1 bis 8 abgelegt und unter Druckbeaufschlagung konsolidiert wird, um eine erste Schicht des Faser-Kunststoff-Verbund-Bauteils (104) herzustellen, wobei das wenigstens eine Faserhalbzeug (200) einen zweiten thermoplastischen Kunststoff mit einer zweiten Schmelztemperatur als Matrixwerkstoff aufweist und zwischen der ersten Schmelztemperatur und der zweiten Schmelztemperatur eine vorgegebene Mindestdifferenztemperatur besteht.

13. Verfahren nach Anspruch 12, **dadurch gekennzeichnet, dass** eine Prozesstemperatur, ein Prozesstemperaturverlauf, ein Konsolidierungsdruck und/oder ein Konsolidierungsdruckverlauf im Hinblick auf eine temporäre Verbindung zwischen der Formfläche (114, 204) und der ersten Schicht kontrolliert werden/wird.

14. Verfahren nach wenigstens einem der Ansprüche 12 bis 13, **dadurch gekennzeichnet, dass** nachfolgend wenigstens ein weiteres vorimprägniertes Faserhalbzeug (200) auf eine Prozesstemperatur erwärmt, an einer vorhergehenden Schicht abgelegt und unter Druckbeaufschlagung konsolidiert wird, um wenigstens eine weitere Schicht herzustellen, wobei eine Prozesstemperatur, ein Prozesstemperaturverlauf, ein Konsolidierungsdruck und/oder ein Konsolidierungsdruckverlauf im Hinblick auf eine permanente Verbindung zwischen den Schichten kontrolliert werden/wird.

15. Verfahren nach wenigstens einem der Ansprüche 12 bis 14, **dadurch gekennzeichnet, dass** das wenigstens eine Faserhalbzeug (200) oder das wenigstens eine weitere Faserhalbzeug auf eine höhere Temperatur als die Formfläche (114, 204) oder die vorhergehende Schicht erwärmt wird.
